# EUROPÄISCHE PATENTSCHRIFT

(11) **EP 1 845 350 B1**
(45) Veröffentlichungstag und Bekanntmachung des Hinweises auf die Patenterteilung: **07.10.2009**
(21) Anmeldenummer: 06007500.9
(22) Anmeldetag: 10.04.2006
(51) Int. Cl.: G01J 3/46, G01J 3/02

(54) **Handfarbmessgerät mit zwei relativ zueinander verstellbaren Gehäuseteilen, in denen die passiven Komponenten bzw. die optoelektronische Messeinheit untergebracht sind**
Hand-held colour measurement device with two housing portions being movable relative to each other which comprise the passive components and the optoelectronic measuring unit, respectively
Colorimètre manuel avec un boîtier comprenant deux parties mobiles l'une par rapport à l'autre, dans lesquelles se trouvent les composants passifs et l'unité de mesure opto-électronique

(43) Veröffentlichungstag der Anmeldung: 17.10.2007
(73) Patentinhaber: X-Rite Europe GmbH, 8105 Regensdorf (CH)
(72) Erfinder: Frick, Beat, 8107 Buchs (CH); Von Orelli, Adrian, 8008 Zürich (CH); Lanker, Michael, 8808 Pfäffikon (CH); Kunz, Thomas, 8108 Dällikon (CH); Offermann, Mario, 8107 Buchs (CH)
(74) Vertreter: Schwabe - Sandmair - Marx

(56) Entgegenhaltungen:
- DE-A1- 10 019 574
- US-A- 6 061 140

## Beschreibung

Die Erfindung betrifft ein Handfarbmessgerät, speziell ein Handspektralfotometer, gemäss dem Oberbegriff des unabhängigen Anspruchs 1.

Handfarbmessgeräte der gattungsgemässen Art sind in zahlreichen Ausfiihrungsvarianten auf dem Markt. Die bekanntesten Vertreter sind z.B. die Geräte "Eye-One" und "Spectro Eye" der Firma Gretag-Macbeth AG, Regensdorf, Schweiz sowie die Geräte "Pulse" der Firma X-Rite Inc., Grandville, MI 49418, USA und "PrintFix Pro" der Firma Datacolor, Lawrenceville, NJ 08648, USA

Handfarbmessgeräte der hier zur Rede stehenden Art können auf beliebigen Messtechnologien basieren. Sie können z.B. als Filter- oder als Spektralmessgeräte ausgebildet sein, wobei letztere am universellsten sind, da aus Spektralmesswerten bekanntlich alle anderen in der Praxis interessierenden Grössen (z.B. Farbwerte, Farbdichtewerte etc.) ableitbar sind. Die vorstehend genannten bekannten Geräte sind alle Spektralmessgeräte.

Handfarbmessgeräte können ferner als autonome Geräte oder als Messperipherie zum Einsatz in Verbindung mit einem steuernden Rechner ausgebildet sein. Autonome Handfarbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Handfarbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Handfarbmessgeräte oft mit einer sog. USB-Schnittstelle (Universal Serial Bus) ausgerüstet, über welche in vielen Fällen gleichzeitig auch die Stromversorgung (vom angeschlossenen Rechner aus) erfolgen kann. Ein solches Messgerätekonzept ist z.B. in US-PS 6 590 648 (≈ EP 1067369 A1) beschrieben.

Handfarbmessgeräte der gattungsgemässen Art sind je nach Ausbildung und Zubehör für viele Messaufgaben einsetzbar. Die klassische Grundanwendungsfunktion ist die Messung an farbigen Substraten, typischerweise etwa einem Druckerzeugnis. Das Handfarbmessgerät wird dabei manuell auf dem Substrat so positioniert, dass die gewünschte Messstelle im Gesichtsfeld (Erfassungsbereich) des Messgeräts zu liegen kommt. Viele bekannte Handfarbmessgeräte sind mit Visierhilfen ausgestattet, die dem Anwender die korrekte Positionierung des Geräts auf dem Substrat erleichtern.

Eine weitere klassische Anwendungsfunktion ist die Serienmessung an einer Mehrzahl von Messstellen auf einem Substrat, typischerweise einem Farbmessstreifen. Diese Anwendungsfunktion wird üblicherweise als Scannen bezeichnet. Das Handfarbmessgerät wird dabei manuell über die Messstellen geführt, wobei auch mechanische Führungshilfmittel, z.B. Schienen oder dgl. eingesetzt werden.

In einer weiteren Anwendungsfunktion können einige bekannte Handfarbmessgeräte auch zur Messung an Monitoren eingesetzt werden. Das Handfarbmessgerät wird dabei manuell an dem zu messenden Monitor positioniert, wobei es den Monitor berührt oder in einem kleinen Abstand (vorzugsweise weniger als 20cm) vom Monitor angeordnet ist..

Ferner können Handfarbmessgeräte in weiteren Anwendungsfunktionen auch zur Messung des Umgebungslichts oder ev. auch für (Fern-)Messungen an einer Projektionsfläche verwendet werden, welche z.B. von einem elektronischen Projektor (Beamer) beleuchtet wird. Diese Punkte sind z.B. beschrieben in EP 1150159 A1 und US-PS 6 590 648 (≈ EP 1067369 A1).

Ein Sonderfall von Anwendungsfunktionen besteht in der Durchführung von Eich- oder Referenzmessungen an weissen oder ev. auch farbigen Referenzmessobjekten (z.B. eine Weisskachel oder Referenzfarbflächen). Beispielsweise sind dazu die bekannten Handfarbmessgeräte mit eingebauten Referenzmessobjekten ausgestattet, die manuell in den Messstrahlengang eingeführt werden können. Alternativ sind manche Handfarbmessgeräte mit externen Referenzmessobjekten als Zubehör ausgestattet, auf denen das Messgerät wie im Fall der normalen Messung positioniert werden kann.

Prinzipiell sind alle der genannten Anwendungsfunktionen mit den meisten bekannten Handfarbmessgeräten realisierbar. Ausser bei der Grundanwendungsfunktion ergeben sich jedoch in vielen Fällen mehr oder weniger grosse praktische Handhabungsschwierigkeiten. Entweder ist für einige Anwendungsfunktionen spezielles Zubehör erforderlich oder ist die Ausrichtung des Messgeräts nicht ohne Hilfsmittel möglich oder ist die Anwendungsfunktion insgesamt nur relativ umständlich realisierbar.

Die US 6,061,140 zeigt ein Spektralmessgerät, das zwischen zwei unterschiedlichen Messfleckgrössen umgestellt werden kann. Konkret ist dazu im Strahlengang unmittelbar vor den Photodioden eine verschiebbare Aperturplatte mit zwei Sätzen von unterschiedlich großen Aperturen vorgesehen, die durch lineare Verstellung der Aperturplatte selektiv in den Strahlengang einbringbar sind.

Die DE 100 19 574 A1 betrifft ein Handmessgerät zur Qualitätsprüfung von Druckerzeugnissen und deren Vor- und Zwischenprodukte, umfassend ein Gehäuse, in dem mindestens eine optoelektronische Sensorik zur wahlweisen Bestimmung von optischen Dichtewerten, spektralen oder farbmetrischen Kennwerte oder von Bilddaten und eine mit der Sensorik verbundene, mit Ein- und Ausgabemitteln versehene Auswertungselektronik angeordnet sind. Es ist vorgesehen, dass das Gehäuse aus zwei lösbar miteinander verbundenen Gehäuseteilen besteht, wobei in einem Gehäuseteil die optoelektronische Sensorik, im anderen Gehäuseteil die Auswertungselektronik und an beiden Gehäuseteilen eine Schnittstelle zur Verbindung der optoelektronischen Sensorik mit der Auswertungselektronik angeordnet sind.

Durch die vorliegende Erfindung soll nun ein Handfarbmessgerät der gattungsgemässen Art dahingehend verbessert werden, dass es einfach und ohne umständliche Handhabung für alle genannten Anwendungsfunktionen einsetzbar ist und dabei ohne Zubehör auskommt.

Diese der Erfindung zugrundeliegende Aufgabe wird durch das durch die Merkmale des unabhängigen Anspruchs 1 gekennzeichnete erfindungsgemässe Handfarbmessgerät gelöst.

Vorteilhafte Ausgestaltungen und Weiterbildungen des erfindungsgemässen Handfarbmessgeräts sind Gegenstand der abhängigen Ansprüche.

Im Folgenden wird die Erfindung anhand der Zeichnung näher erläutert. Es zeigen:
- Fig. 1: ein Ausführungsbeispiel des erfindungsgemässen Handfarbmessgeräts in Schrägansicht,
- Fig. 2: das Handfarbmessgerät der Fig. 1 mit einem abgenommenen äusseren Gehäuseteil,
- Fig. 3: das Innere des Handfarbmessgeräts der Fig. 1,
- Fig. 4: eine Ansicht analog Fig. 3, wobei einige funktionsunwesentliche Details weggelassen sind,
- Fig. 5: einen Schnitt durch das Handfarbmessgerät nach der Ebene V-V der Fig. 1, wobei nur funktionswesentliche Details dargestellt sind,
- Fig. 6: eine Schrägansicht der opto-elektronischen Messanordnung des Handfarbmessgeräts,
- Fig. 7-8: zwei Skizzen zur Erläuterung einer am Handfarbmessgerät vorgesehenen Visiereinrichtung,
- Fig. 9: eine schematische Schnittdarstellung des Handfarbmessgeräts zur Erläuterung der Funktionsweise bzw. verschiedener Anwendungsfunktionen,
- Fig. 10: eine schematische Seitenansicht des Handfarbmessgeräts mit einem integrierten Befestigungshaken,
- Fig. 11: das Handfarbmessgerät im praktischen Einsatz bei einer Messung an einem Monitor und
- Fig. 12: eine stark vereinfachte Prinzipskizze eines zweiten Ausführungsbeispiels des erfindungsgemässen Handfarbmessgeräts.

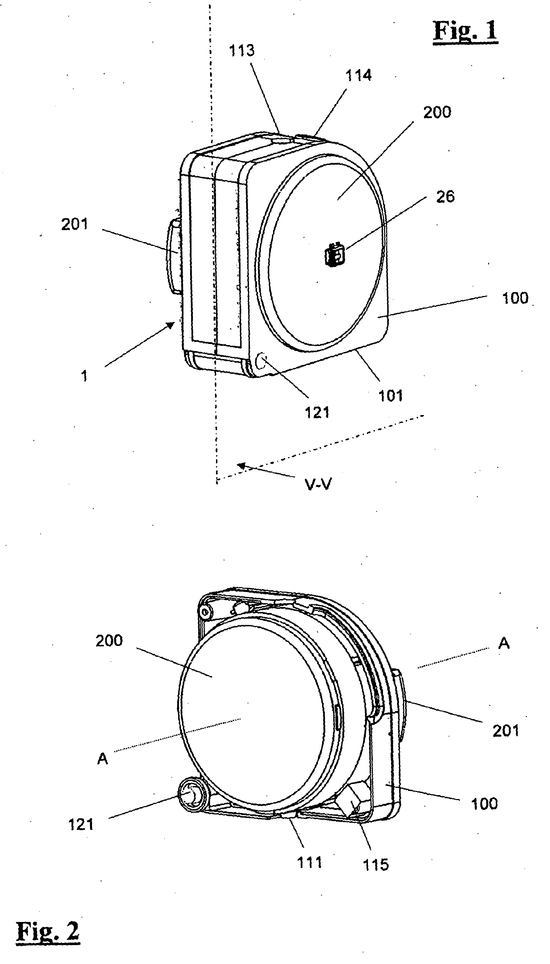

Wie die Figur 1 zeigt, ist die äussere Gestalt des dargestellten Ausführungsbeispiels des erfindungsgemässen Handfarbmessgeräts im wesentlichen quadratisch quadrisch mit einer abgerundeten Ecke. Im praktischen Einsatz steht das Handfarbmessgerät, wie in den Figuren gezeigt, hochkant, die flache Unterseite 101 dient dabei als Standfläche. Die Tiefe des Geräts (senkrecht zu den quadratischen Seitenflächen) ist im Vergleich zur Länge und Höhe deutlich geringer.

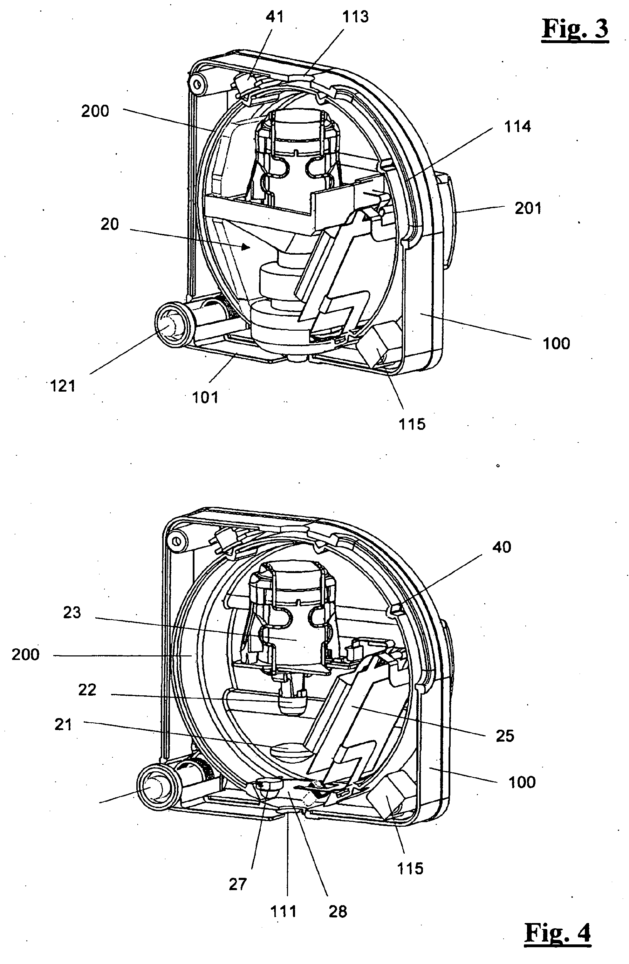

Der wichtigste Aspekt der Erfindung besteht in einer speziellen Aufteilung und baulichen Zusammenfassung der einzelnen Funktionskomponenten des Geräts. Wie die Figuren 2 und 3 verdeutlichen, ist das Handfarbmessgerät in zwei Geräteblöcke 100 und 200 aufgeteilt, die relativ zu einander in verschiedene, definierte Positionen bewegt werden können. Im gezeigten Ausführungsbeispiel ist der erste Geräteblock 100 im wesentlichen ringförmig ausgebildet und bildet gleichzeitig den grössten Teil des Gerätegehäuses 1. Der zweite Geräteblock 200 ist im wesentlichen trommelförmig ausgebildet und um seine Achse A im ersten Geräteblock 100 drehverstellbar gelagert. Die Gesamtheit aller möglichen definierten Drehstellungen, welche der zweite Geräteblock 200 innerhalb des ersten Geräteblocks 100 einnehmen kann, ist im folgenden als Anwendungspositionen bezeichnet.

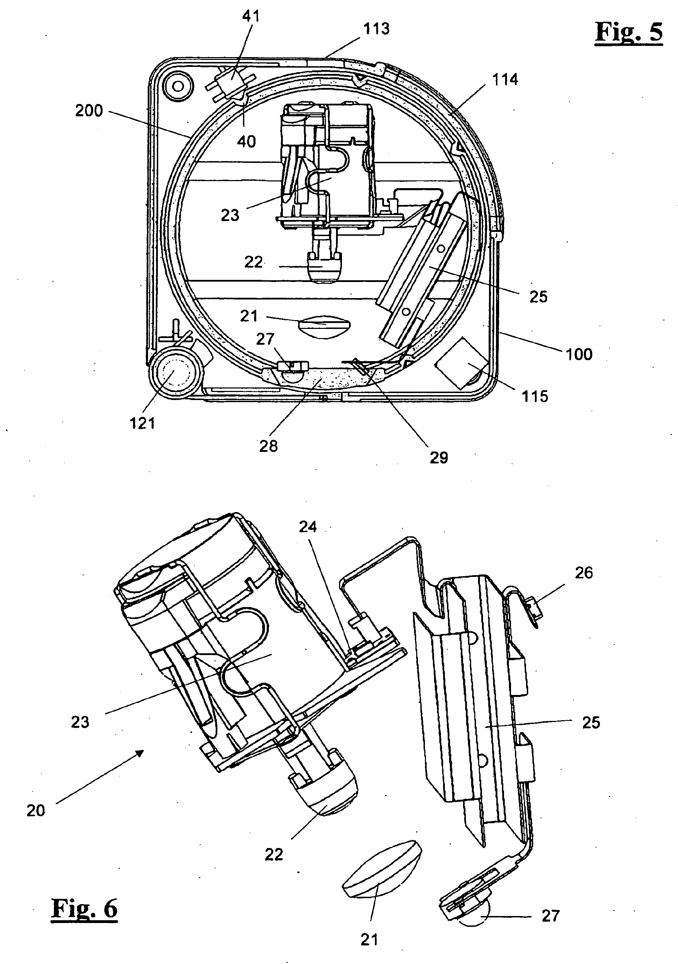

Wie insbesondere aus den Figuren 3-5 hervorgeht, enthält der zweite (bei diesem Ausführungsbeispiel innere) Geräteblock 200 die vollständige opto-elektronische Messeinheit 20 des Handfarbmessgeräts. Diese umfasst alle optischen und elektrischen Komponenten, welche zur Erfassung des von einem Messobjekt ausgehenden Messlichts sowie zur Umwandlung in entsprechende Messsignale und zur Aufbereitung derselben in vorzugsweise digitale Messdaten erforderlich sind. Im einzelnen sind dies, wie besonders deutlich die Detaildarstellung der Figur 6 zeigt, eine Eingangslinse 21, ein Aufpickkopf 22, ein Spektrometer 23 mit zugehöriger Elektronik 24 für die im Spektrometer 23 enthaltenen Lichtwandler und eine Verarbeitungs- und Steuerelektronik 25, die vorzugsweise auf einer flexiblen und aus Platzgründen gefalteten Leiterplatte aufgebaut ist. Zur Kommunikation mit einem externen Rechner ist eine USB-Schnittstelle 26 vorgesehen, über welche gleichzeitig auch die Stromversorgung erfolgt. Für Remissionsmessungen an nicht selbst leuchtenden Messobjekten ist ferner noch eine Lichtquelle 27 in Form einer weissen Leuchtdiode vorgesehen, die ebenfalls von der Verarbeitungselektronik 25 angesteuert wird. Für Glanzmessungen (Messungen von vom Messobjekt gerichtet reflektiertem Messlicht) kann in an sich bekannter Weise gegenüber der Lichtquelle 27 auch noch ein zusätzlicher optischer Sensor 29 (Figur 5) vorgesehen sein sowie ev. eine abbildende Optik, welche die an der zu messenden Oberfläche gespiegelte Lichtquelle in den optischen Sensor abbildet. Als abbildende Elemente kommen beispielsweise Linsen, Spiegel, diffraktive Elemente oder eine Blende in Frage.

Der Eingangslinse 21 gegenüber befindet sich in der Wand des zweiten Geräteblocks 200 eine ausreichend grosse Öffnung 28, durch die Messlicht vom Messobjekt in das Innere des zweiten Geräteblocks 200 eintritt und durch die auch das Beleuchtungslicht der Lichtquelle 27 hindurchtritt.

Die opto-elektronische Messeinheit 20 ist konventionell aufgebaut. Eine detaillierte Beschreibung inklusive Anbindung an einen externen Rechner findet sich beispielsweise in US 2005/0052648 A1 (≈ EP 1 507 134 A1) und US Patentanmeldung Ser.No. 11/355,140 vom 15.02.2006 (≈ EP Patentanmeldung Nr. 06001006 vom 18.01.2006). Der Fachmann bedarf also insofern keiner näheren Erläuterungen.

Im dargestellten Ausführungsbeispiel ist die opto-elektronische Messeinheit 20 als Gitter-Spektralfotometer ausgebildet. Selbstverständlich kann die opto-elektronische Messeinheit 20 aber auch auf anderen Technologien basieren. Insbesondere kann die Messeinheit 20 als Colorimeter ausgebildet sein, welches auf drei oder mehr dem visuellen Empfinden angepassten Filtern basiert. Das Spektralfotometer kann weiterhin anstatt mit einem Gitter mittels mindestens 3, typischerweise aber 6 bis 16 Filtern realisiert sein, welche nicht speziell dem visuellen Empfinden angepasst sind. Schliesslich kann die Messeinheit 20 auch auf dem Prinzip einer einzelnen Photodidode basieren, welche sequenziell von mehreren farbigen Lichtquellen (z.B. von LEDs) beleuchtet wird. In allen genannten Fällen kann die Messeinheit 20 anstatt als kompaktes Untersystem auch durch verteilte Elemente realisiert sein.

Das dargestellte Handfarbmessgerät ist ferner als Peripherie-Gerät zum Anschluss an einen externen Rechner ausgelegt, d.h. alle Funktionen werden über die Kommunikationsschnittstelle 26 (vorzugsweise eine USB-Schnittstelle) vom externen Rechner gesteuert, und die erzeugten Messdaten werden an den Rechner übertragen, wo sie weiter verarbeitet werden können. Selbstverständlich kann das Handfarbmessgerät aber auch als autonomes Messgerät ausgebildet sein, wobei dann eben die zusätzlich erforderlichen Funktionselemente (Bedienungs- und Anzeigeorgane, Stromversorgung) im Gerät selbst vorhanden sein müssten.

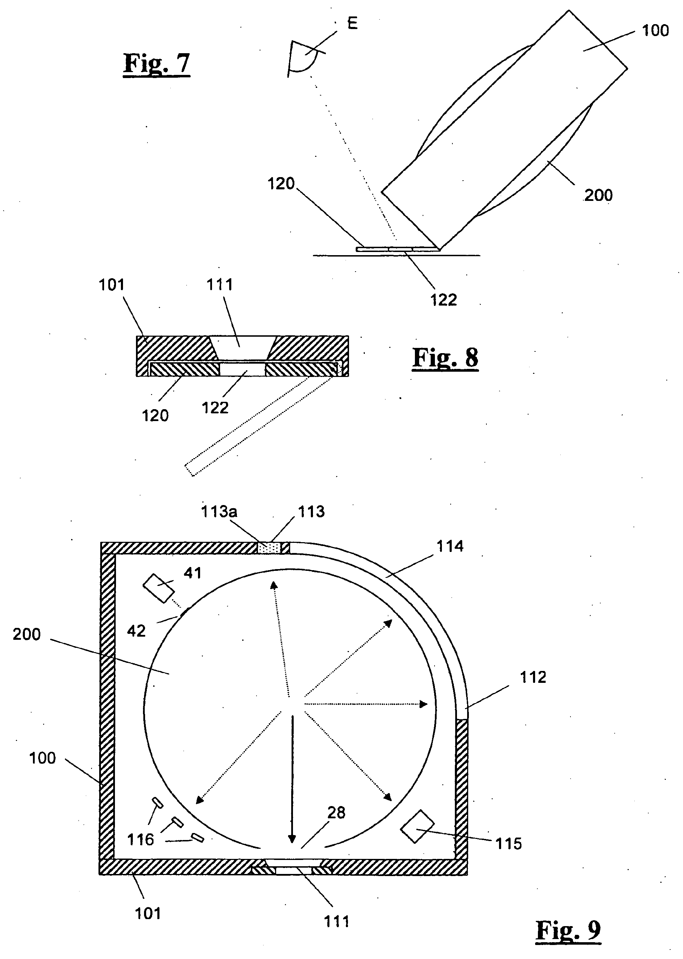

Im ersten (hier äusseren) Geräteblock 100 sind alle passiven Komponenten des Handfarbmessgeräts untergebracht, welche für die verschiedenen Anwendungsfunktionen des Messgeräts erforderlich sind. Im wesentlichen sind dies diverse Messfenster 111-114 in den Umfangswänden des ersten Geräteblocks sowie in der inneren Peripherie des ersten Geräteblocks ein Weissreferenzstandard 115 und gegebenenfalls auch Farbreferenzstandards 116, die für die Eichung bzw. Kalibrierung des Geräts verwendet werden. In der Figur 9 ist dies schematisch verdeutlicht. Das Handfarbmessgerät ist hier im Beispiel für die Anwendungsfunktionen "Punktmessung" (übliche Messung an einem einzelnen Messort auf einem Substrat), "Serienmessung" (automatische Messung an aneinandergereihten Messorten auf einem Substrat), "MonitorMessung", "Projektormessung", "Umgebungslichtmessung", "Weissreferenzmessung" und "Farbreferenzmessung" ausgelegt.

Jeder Anwendungsfunktion ist eine Anwendungsposition des zweiten Geräteblocks 200 relativ zum ersten Geräteblock 100 zugeordnet, in welcher Anwendungsposition sich die Messöffnung 28 des zweiten Geräteblocks 200 vor jeweils einem der Messfenster 111-114 bzw. dem Weissreferenzstandard 115 oder den Farbreferenzstandards 116 befindet. In der Figur 9 befindet sich die Messöffnung 28 beispielsweise vor dem in der flachen Bodenwand 101 des ersten Geräteblocks befindlichen Messfenster 111. Die Auswahl der verschiedenen Anwendungsfunktionen bzw. die Einstellung des Farbmessgeräts auf diese Anwendungsfunktionen erfolgt dann durch entsprechendes (Dreh-)Verstellen des inneren Geräteblocks 200 relativ zum äusseren Geräteblock 100 (siehe insbesondere Figur 9).

Um diese Drehverstellung zu erleichtern, ist es zweckmässig, einen oder beide der Geräteblöcke so zu formen, dass sie von den Fingern des Bedieners gut gefasst werden können. Dies kann z.B. durch entsprechende Wulste, Löcher, Aussparungen etc. erreicht werden. In den Figuren 1, 2 und 10 ist eine wulstartige Ausformung 201 des zweiten Geräteblocks 200 zu erkennen.

Für die Punktmessung, der häufigsten Anwendungsfunktion, ist ein Hauptmessfenster 111 in der flachen Bodenwand 101 des ersten Geräteblocks 100 angeordnet. Im Bereich dieses Hauptmessfensters 111 befindet sich ferner eine ausklappbare Visierhilfe 120. Wie die Figuren 7 und 8 zeigen, ist die Visierhilfe 120 in die Bodenwand 101 eingelassen. Um das Handfarbmessgerät auf dem Messpunkt zu positionieren, wird die Visierhilfe 120 durch Betätigen eines Auslöseknopfs 121 (Figuren 1-4) ausgeklappt und mit ihrer Zielöffnung 122 auf dem Messpunkt positioniert. Das Messgerät wird dabei etwas schräg gehalten, so dass der Benutzer (Augensymbol E) durch die Visierhilfe 120 auf den Messpunkt sehen kann. Anschliessend wird das Messgerät aufgerichtet und die Visierhilfe 120 dabei wieder in die Bodenwand 101 zurückgeklappt.

Für Serienmessungen wird analog vorgegangen. Sobald das Farbmessgerät auf dem ersten Messpunkt positioniert ist, wird ein Serienmessvorgang ("Scan") ausgelöst und dabei gleichzeitig das Farbmessgerät manuell entlang der Linie von Messorten, im allgemeinen ein Farbmessstreifen, bewegt. Es versteht sich, dass dies nur mit hinreichend grossflächigen Messfeldern vernünftig möglich ist. Durch die verhältnismässig schmale Ausbildung der Standfläche des Farbmessgeräts wird das Scannen entlang eines Messstreifens jedoch stark erleichtert. Dies kann durch geeignete Markierungen im Geräteblock 100 noch unterstützt werden. Ferner kann das Gleiten durch entsprechende Elemente in der Bodenwand 101 unterstützt werden. Solche Elemente können Gleitpunkte, Gleitstreifen, Rollen, Kugeln, Räder, etc. sein.

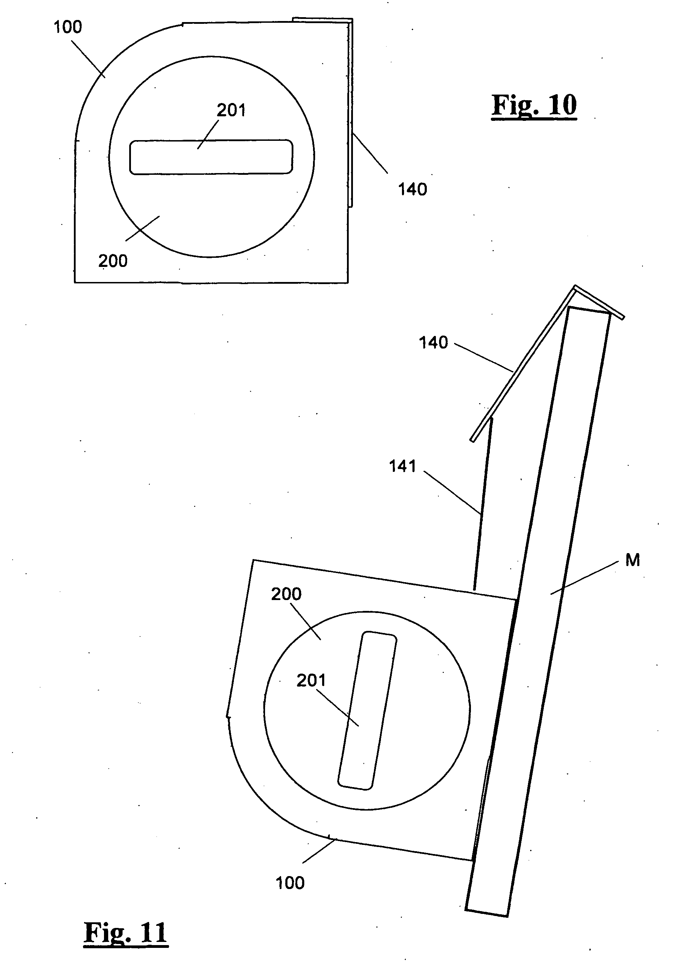

Für Messungen an einem Monitor ist der äussere Geräteblock 100 mit einem aus den Figuren 10 und 11 ersichtlichen integrierten Haken 140 versehen, mittels welchen das Handfarbmessgerät am auszumessenden Monitor M aufgehängt werden kann, wie dies die Figur 11 zeigt. Die Messung des Monitors erfolgt dabei durch das Hauptmessfenster 111 in der flachen Bodenwand 101 des ersten Geräteblocks 100. Der Haken 140 ist in geeigneter Weise lösbar am ersten Geräteblock 100 befestigt und mit diesem über eine kurze Kordel oder Kette oder einen Draht oder ein Seil 141 verbunden. Dadurch, dass der Haken ein fester Bestandteil des Gerätes ist, entfällt das bisher übliche umständliche Montieren eines Zubehörteils für die Monitorbefestigung. Durch die Befestigung des Handfarbmessgeräts am Monitor mittels eines Hakens entfällt die Verwendung eines schweren Gegengewichtes.

Für die Messung an einem Monitor kann alternativ ein Monitormessfenster 112 vorgesehen sein. Dieses Fenster kann auch seitlich am Gehäuse liegen. Weiter ist es möglich, das Monitormessfenster 112 in ein Prjektormessfenster 114 (siehe weiter unten) zu integrieren. Das Farbmessgerät kann dadurch einfach vorden zu vermessenden Monitor hingestellt werden und die bisher übliche umständliche Montage am Monitor mittels Zubehörteilen entfällt. Diese Anwendungsfunktion kann zusätzlich oder an Stelle der vorstehend erwähnten Messung ausgeführt werden, bei welcher das Gerät auf dem Monitor aufgehängt wird und mit dem Monitor in Kontakt ist.

Für die Umgebungslichtmessung ist im ersten Geräteblock 100 ein Umgebungslichtmessfenster 113 vorgesehen, welches ungefähr diagonal, also um ca. 180° versetzt, gegenüber dem Hauptmessfenster 111 an der Oberseite des Geräteblocks 100 angeordnet ist. Vorzugsweise ist in diesem Messfenster 113 eine Streuscheibe 113a angeordnet.

Für Messungen an Projektionsflächen, die z.B. von einem elektronischen Projektor (Beamer) mit Licht beaufschlagt werden, ist schliesslich im abgerundeten Teil des Geräteblocks 100 ein Projektormessfenster 114 vorgesehen. Dieses ist länglich ausgebildet und erstreckt sich in einem Bogen von etwa 60°. Durch dieses Projektormessfenster kann das von der auszumessenden Projektionsfläche stammende Messlicht in das Farbmessgerät eintreten. Durch Drehverstellung des zweiten Geräteblocks 200 (z.B. in diskreten Schritten) kann dabei die opto-elektronische Messeinrichtung 20 ohne zusätzliche Mittel optimal auf die auszumessende Projektionsfläche ausgerichtet werden (Elevations-Winkel). Der unterste Teil des Projektormessfensters 114 kann gleichzeitig auch das schon erwähnte Monitormessfenster 112 bilden.

Um den zweiten Geräteblock 200 und damit die opto-elektronische Messeinheit 20 in der jeweils gewünschten Anwendungspositionen zu arretieren, sind an sich bekannte Rastmittel vorgesehen. Diese können z.B. aus Einkerbungen 40 an der äusseren Umfangsfläche des zweiten Geräteblocks 200 bestehen, in welche ein Nocken 41 im Inneren des ersten Geräteblocks federnd eingreift. Der Nocken 41 kann dabei auch gleichzeitig als Positionssensor wirken und ein entsprechendes Positionssignal an die Steuerelektronik 25 liefern, das dann zur Einstellung der für die jeweilige Anwendungsfunktion erforderlichen Messabläufe bzw. Auswertung der Messdaten herangezogen werden kann. Selbstverständlich kann die Position des zweiten Geräteblocks auch mittels eines anderen Sensors erfasst werden, der z.B. auf der Umfangswand des zweiten Geräteblocks angebrachte Markierungen 42 abtastet, wie dies in Figur 9 symbolisiert ist. Das Erreichen einer definierten Anwendungsposition bzw. das Einrasten in dieselbe kann dem Benutzer des Messgeräts über die Steuerelektronik 25 auch in passender Weise akustisch oder optisch signalisiert werden.

Durch Piktogramme, welche auf einem Geräteblock angebracht sind, und einen Index auf dem anderen Geräteblock kann eine weitere intuitive Kontrolle der eingestellten Anwendungsposition bzw. -Funktion erreicht werden.

Die hier rein beispielsweise beschriebene trommelförmige äussere Gestalt des zweiten Geräteblocks 200 hat den Vorteil, dass in bestimmten Anwendungsstellungen, z.B. während Messungen am Weissreferenzstandard oder den Farbreferenzstandards, alle Messfenster 111-114 im ersten Geräteblock 100 verschlossen sind und das Messgerät dadurch vor dem Eindringen von Fremdlicht und Verschmutzung geschützt ist. Eventuell kann für diese Schutzfunktion auch eine eigene Park-Position für den zweiten Geräteblock 200 vorgesehen sein.

Es ist möglich, dass einzelne oder alle Messanwendungen nicht in voneinander getrennten Anwendungspositionen (Mess-Stellungen) ausgeführt werden, sondern mit dem gleichen Messfenster arbeiten. Insbesondere können die Funktionen Einzelmessung ("Spot") und Serienmessung ("Scan"), die Funktionen Einzelmessung, Serienmessung und Monitormessung in ein und demselben Messfenster ausgeführt werden.

Es ist weiter möglich, das zu messende Licht für einzelne oder alle Messfunktionen über eine bestimmte Länge zu transportieren und um einen bestimmten Winkel, z.B. um 90 Grad, umzuleiten. Dadurch können einzelne oder alle Messfenster in eine für die Messung optimale Position angebracht werden. Insbesondere kann für die Monitormessung das Messgerät so ausgeführt werden, dass es während der Messung flach auf dem zu messenden Bildschirm liegt.

Im beschriebenen Ausführungsbeispiel ist eine drahtgebundene Schnittstelle 26 zur Kommunikation mit einem externen Rechner vorgesehen. Selbstverständlich kann auch eine Funk- oder Infrarot-Schnittstelle vorgesehen sein.

Für bestimmte Anwendungen, namentlich für die Messung von Umgebungslicht, von Monitoren im Abstand oder von der Rückstrahlung eines Projektors kann es vorteilhaft sein, das Handfarbmessgerät mit einem Stativhalter auszurüsten. Dieser Stativhalter ist vorzugsweise schraubbar und befindet sich am Gehäuseblock 100, vorzugsweise an der Unterseite 101 des Gerätes.

Schliesslich kann es auch vorteilhaft sein, das Farbmessgerät mit schockabsorbierenden Elementen, z.B. Schaumstoffelementen auszustatten, um den Einsatz auch unter rauhen Umgebungsbedingungen zu gewährleisten.

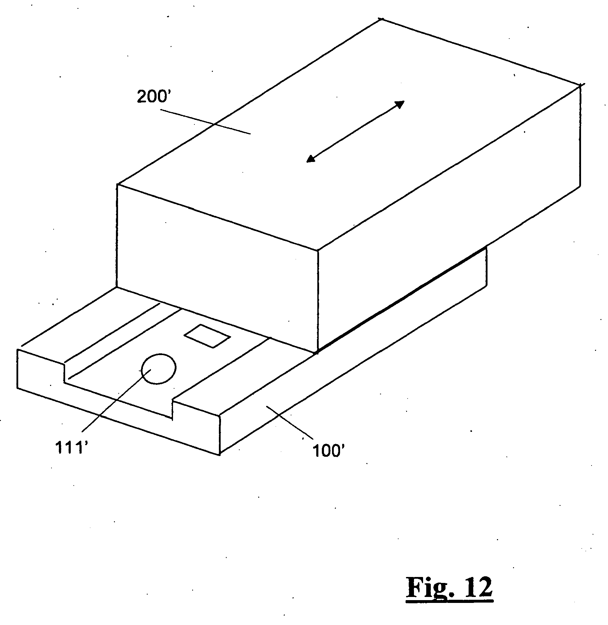

Im in den Figuren 1-11 dargestellten Ausführungsbeispiel ist der zweite Geräteblock 200 drehverstellbar im ersten Geräteblock 100 gelagert. Alternativ könnten die beiden Geräteblöcke z.B. aber auch linear relativ zu einander beweglich sein, so wie dies in der Prinzipskizze der Figur 12 dargestellt ist. Der erste Geräteblock 100' bildet dabei einen Standsockel für das Messgerät. Auch bei dieser Ausführungsvariante kann die gegenseitige Verstellbarkeit der beiden Geräteblöcke 100' und 200' durch entsprechende Ausbildung von Griffhilfen für den Benutzer erleichtert werden. Die Messfenster und weiteren Bedienelemente sind entspechend anders als beim Ausführungsbeispiel der Figuren 1-11 angeordnet.

## Patentansprüche

1. Handfarbmessgerät mit einem Gehäuse (1), in dem sich eine opto-elektronische Messeinheit (20) befindet, welche von einem Messobjekt ausgehendes Messlicht empfängt, in entsprechende elektrische Messsignale umwandelt und diese Messsignale zu die Farbe des Messobjekts charakterisierenden, vorzugsweise digitalen Messdaten verarbeitet, und mit für die Realisierung verschiedener Anwendungsfunktionen erforderlichen passiven Komponenten (111 - 116), die in den Messstrahlengang der Messeinheit (20) selektiv einbringbar sind,
**dadurch gekennzeichnet, dass**
das Handfarbmessgerät einen äußeren Geräteblock (100) und einen in diesem um eine Achse (A) in mehrere definierte Anwendungspositionen drehverstellbar gelagerten inneren Geräteblock (200) aufweist;
die passiven Komponenten (111 - 116) in dem äußeren Geräteblock (100) angeordnet sind;
die opto-elektronische Messeinheit (20) in dem inneren Geräteblock (200) angeordnet ist;
der äußere Geräteblock (100) im Wesentlichen ringförmig ausgebildet ist und dass der innere Geräteblock (200) äußerlich im Wesentlichen trommelförmig ausgebildet und um seine Achse (A) drehverstellbar im Inneren des äußeren Geräteblocks (100) gelagert ist;
der äußere Geräteblock (100) zumindest einen Teil des Gehäuse (1) oder einen Standsockel des Handfarbmessgeräts bildet;
die opto-elektronische Messeinheit (20) mittels des inneren Geräteblocks (200) relativ zu den passiven Komponenten (111 - 116) so gedreht werden kann, dass in den Anwendungspositionen sich jeweils eine der passiven Komponenten (111 - 116) im Messstrahlengang der opto-elektronischen Messeinheit (20) befindet;
der innere Geräteblock (200) optische (21, 22, 23, 27, 28, 29) und elektrische (24, 25) Komponenten enthält, die zur Erfassung des von einem Messobjekt ausgehenden Messlichts sowie zur Umwandlung in entsprechende Messsignale und zur Aufbereitung derselben in Messdaten erforderlich sind; und
der äußere Geräteblock (100) an seiner Außenseite mit mehreren Messfenstern (111-114) versehen ist, durch welche hindurch von außen Messlicht zur opto-elektronischen Messeinheit (20) gelangen kann, wobei in jeder Anwendungsposition des inneren Geräteblocks (200) sich jeweils nur eines der Messfenster (111-114) im Messstrahlengang befindet;
wobei das Messlicht vom Messobjekt, über das Messfenster (111-114) des äußeren Geräteblocks (100), das Messfenster (28) des inneren Geräteblocks (200), eine Eingangslinse (21), und einen Aufpickkopf (22) zu der opto-elektrischen Messeinheit (20) gelangt.

2. Handfarbmessgerät nach Anspruch 1, **dadurch gekennzeichnet, dass** lösbare Rastmittel (40,41) vorgesehen sind, um deninneren Geräteblock (200) in den verschiedenen Anwendungspositionen relativ zum äußeren Geräteblock (100) definiert festzuhalten.

3. Handfarbmessgerät nach Anspruch 1 oder 2, wobei der innere Geräteblock (200) weiter eine Lichtquelle (27) und einen optischen Sensor (29) aufweist.

4. Handfarbmessgerät nach einem der vorherigen Ansprüche, wobei die opto-elektrische Messeinheit (20) als Spektralfotometer, Gitter-Spektralfotometer, Colorimeter oder als Photodiode ausgebildet ist.

5. Handfarbmessgerät nach Anspruch 1 oder 4, **dadurch gekennzeichnet, dass** der innere Geräteblock (200) mit Greifhilfen (201) ausgebildet ist, die eine Drehbewegung durch den Benutzer erleichtern.

6. Handfarbmessgerät nach einem der vorangehenden Ansprüche, **dadurch gekennzeichnet, dass** der äußere Geräteblock (100) eine Abflachung (101) aufweist, welche eine Standfläche für das Handfarbmessgerät bildet.

7. Handfarbmessgerät nach einem der vorherigen Ansprüche, wobei das Handfarbmessgerät im Wesentlichen quadratisch quadrisch mit einer abgerundeten Ecke ist, und wobei die Tiefe des Gerätes, die senkrecht zu den quadratischen Seitenflächen ist, im Vergleich zur Länge und Höhe des Gerätes geringer ist.

8. Handfarbmessgerät nach Anspruch 6, **dadurch gekennzeichnet, dass** sich ein Hauptmessfenster (111) im Bereich der Abflachung (101) befindet.

9. Handfarbmessgerät nach Anspruch 8, **dadurch gekennzeichnet, dass** das Hauptmessfenster (111) für mindestens eine der drei Anwendungsfunktionen Einzelmessung, Serienmessung und Monitormessung ausgebildet ist.

10. Handfarbmessgerät nach einem der vorangehenden Ansprüche, **dadurch gekennzeichnet, dass** sich ein Umgebungslichtmessfenster (113) an der Oberseite des äußeren Geräteblocks (100) befindet und vorzugsweise mit einer Streuscheibe (113a) versehen ist.

11. Handfarbmessgerät nach einem der vorangehenden Ansprüche, **dadurch gekennzeichnet, dass** der äußere Geräteblock (100) ein längliches Projektormessfenster (114) aufweist, das im seitlichen Oberteil des äußeren Geräteblocks (100) angeordnet ist und sich vorzugsweise über einen Bogen von mindestens etwa 60° erstreckt.

12. Handfarbmessgerät nach einem der vorangehenden Ansprüche, **dadurch gekennzeichnet, dass** der äußere Geräteblock (100) mit einem Weissreferenzstandard (115) ausgestattet ist, welcher sich in einer der Anwendungspositionen des inneren Geräteblocks (200) im Messstrahlengang der opto-elektronischen Messeinheit (20) befindet.

13. Handfarbmessgerät nach einem der vorangehenden Ansprüche, **dadurch gekennzeichnet, dass** der äußere Geräteblock (100) mit mindestens einem Farbreferenzstandard (116) ausgestattet ist, welcher sich in einer der Anwendungspositionen des inneren Geräteblocks (200) im Messstrahlengang der opto-elektronischen Messeinheit (20) befindet.

14. Handfarbmessgerät nach einem der Ansprüche 12 und 13, **dadurch gekennzeichnet, dass** der Weissreferenzstandard (115) und/oder der Farbreferenzstandard (116) im Inneren des äußeren Geräteblocks (100) zwischen den Messfenstem (111-114) angeordnet ist bzw. sind.

15. Handfarbmessgerät nach einem der vorangehenden Ansprüche, **dadurch gekennzeichnet, dass** ein Positionssensor (41) zur Erfassung der Anwendungspositionen des inneren Geräteblocks (200) relativ zum äußeren Geräteblock (100) vorgesehen ist.

16. Handfarbmessgerät nach einem der vorangehenden Ansprüche, **dadurch gekennzeichnet, dass** für den inneren Geräteblock (200) mindestens eine Anwendungsposition vorgesehen ist, in welcher alle Messfenster (111-114) geschlossen sind.

17. Handfarbmessgerät nach einem der Ansprüche 11 und 12, **dadurch gekennzeichnet, dass** alle Messfenster (111-114) geschlossen sind, wenn sich der innere Geräteblock (200) in einer für die Messung des Weissreferenzstandards (115) und/oder des Farbreferenzstandards (116) vorgesehenen Anwendungsposition befindet.

18. Handfarbmessgerät nach einem der vorangehenden Ansprüche, **dadurch gekennzeichnet, dass** die opto-elektronische Messeinheit (20) eine Lichtquelle (27) zur Beaufschlagung des Messobjekts enthält.

19. Handfarbmessgerät nach Anspruch 18, **dadurch gekennzeichnet, dass** die opto-elektronische Messeinheit (20) mindestens einen zusätzlichen optischen Sensor (29) zur Erfassung von vom Messobjekt gerichtet reflektiertem Messlicht umfasst.

20. Handfarbmessgerät nach Anspruch 19, **dadurch gekennzeichnet, dass** optische Mittel vorgesehen sind, um das gerichtet reflektierte Messlicht auf den zusätzlichen optischen Sensor zu lenken bzw. die dieses Messlicht emittierende Lichtquelle auf den Sensor abzubilden.

21. Handfarbmessgerät nach Anspruch 8, **dadurch gekennzeichnet, dass** im Bereich des Hauptmessfensters (111) eine ausklappbare Visierhilfe (120) vorgesehen ist.

22. Handfarbmessgerät nach einem der vorangehenden Ansprüche, **dadurch gekennzeichnet, dass** es mit einem integrierten Monitorhalter (140) zur Befestigung an einem auszumessenden Monitor (M) ausgerüstet ist.

23. Handfarbmessgerät nach einem der vorangehenden Ansprüche, **dadurch gekennzeichnet, dass** es mit einem vorzugsweise sehraubbaren Stativhalter ausgerüstet ist.

24. Handfarbmessgerät nach einem der vorangehenden Ansprüche, **dadurch gekennzeichnet, dass** die Abflachung (101) des äußeren Geräteblocks (100) mit Gleitelementen versehen ist.

## Claims

1. A hand-held colorimeter having a housing (1) in which an optoelectronic measurement unit (20) is located, which receives measurement light originating from a measurement object, converts said light into corresponding electrical measurement signals and processes these measurement signals into preferably digital measurement data characterising the colour of the measurement object, and having passive components (111 - 116) required for the performance of different application functions, which components can be selectively moved into the measurement beam path of the measurement unit (20),
**characterised in that**
the hand-held colorimeter comprises an outer device block (100) and an inner device block (200) mounted in said outer device block for rotational adjustment about an axis (A) into several defined application positions;
the passive components (111 - 116) are disposed in the outer device block (100);
the optoelectronic measurement unit (20) is disposed in the inner device block (200);
the outer device block (100) has a substantially annular design and the exterior of the inner device block (200) has a substantially drum-shaped design and is mounted in the interior of the outer device block (100) for rotational adjustment about its axis (A);
the outer device block (100) forms at least a part of the housing (1) or a pedestal of the hand-held colorimeter;
the optoelectronic measurement unit (20) can be rotated by means of the inner device block (200) relative to the passive components (111 - 116) so that in the application positions in each case one of the passive components (111 - 116) is located in the measurement beam path of the optoelectronic measurement unit (20);
the inner device block (200) contains optical components (21, 22, 23, 27, 28, 29) and electrical components (24, 25) which are required to detect the measurement light originating from a measurement object and also to convert it into corresponding measurement signals and to process them into measurement data; and
the outer device block (100) is provided with several measurement windows (111-114) on its exterior, through which measurement light can come from the outside to the optoelectronic measurement unit (20), wherein in each application position of the inner device block (200) only one of the measurement windows (111 - 114) is located in the measurement beam path;
wherein the measurement light from the measurement object travels via the measurement window (111 - 114) of the outer device block (100), the measurement window (28) of the inner device block (200), an input lens (21) and a pickup head (22) to the optoelectrical measurement unit (20).

2. A hand-held colorimeter according to Claim 1,
**characterised in that** releasable detent means (40, 41) are provided to hold the inner device block (200) in defined manner in the different application positions relative to the outer device block (100).

3. A hand-held colorimeter according to Claim 1 or 2,
wherein the inner device block (200) also comprises a light source (27) and an optical sensor (29).

4. A hand-held colorimeter according to one of the preceding Claims,
wherein the optoelectrical measurement unit (20) is designed as a spectrophotometer, a grating spectrophotometer a colorimeter or as a photodiode.

5. A hand-held colorimeter according to Claim 1 or 4,
**characterised in that** the inner device block (200) is provided with gripping aids (201) which facilitate a rotational movement by the user.

6. A hand-held colorimeter according to one of the preceding Claims,
**characterised in that** the outer device block (100) comprises a flattened portion (101) which forms a supporting base for the hand-held colorimeter.

7. A hand-held colorimeter according to one of the preceding Claims,
wherein the hand-held colorimeter is essentially square with a rounded corner, and wherein the depth of the device, which is perpendicular to the square lateral surfaces, is less than the length and height of the device.

8. A hand-held colorimeter according to Claim 6,
**characterised in that** a main measurement window (111) is located in the region of the flat portion (101).

9. A hand-held colorimeter according to Claim 8,
**characterised in that** the main measurement window (111) is designed for at least one of the three application functions individual measurement, serial measurement and monitor measurement.

10. A hand-held colorimeter according to one of the preceding Claims,
**characterised in that** an ambient light measurement window (113) is located on the upper side of the outer device block (100) and is preferably provided with a scattering disk (113a).

11. A hand-held colorimeter according to one of the preceding Claims,
**characterised in that** the outer device block (100) comprises an elongate projector measurement window (114) which is disposed in the lateral upper part of the outer device block (100) and preferably extends over an arc of at least roughly 60°.

12. A hand-held colorimeter according to one of the preceding Claims,
**characterised in that** the outer device block (100) is equipped with a white reference standard (115) which is located in the measurement beam path of the optoelectronic measurement unit (20) in one of the application positions of the inner device block (200).

13. A hand-held colorimeter according to one of the preceding Claims,
**characterised in that** the outer device block (100) is equipped with at least one colour reference standard (116) which is located in the measurement beam path of the optoelectronic measurement unit (20) in one of the application positions of the inner device block (200).

14. A hand-held colorimeter according to one of Claims 12 and 13,
**characterised in that** the white reference standard (115) and/or the colour reference standard (116) is/are located in the interior of the outer device block (100) between the measurement windows (111-114).

15. A hand-held colorimeter according to one of the preceding Claims,
**characterised in that** a position sensor (41) is provided for detecting the application positions of the inner device block (200) relative to the outer device block (100).

16. A hand-held colorimeter according to one of the preceding Claims,
**characterised in that** for the inner device block (200) there is provided at least one application position in which all measurement windows (111 - 114) are closed.

17. A hand-held colorimeter according to one of Claims 11 and 12,
**characterised in that** all measurement windows (111 - 114) are closed when the inner device block (200) is in an application position intended for the measurement of the white reference standard (115) and/or of the colour reference standard (116).

18. A hand-held colorimeter according to one of the preceding Claims,
**characterised in that** the optoelectronic measurement unit (20) contains a light source (27) for the illumination of the measurement object.

19. A hand-held colorimeter according to Claim 18,
**characterised in that** the optoelectronic measurement unit (20) includes at least one additional optical sensor (29) for detecting measurement light directionally reflected by the measurement object.

20. A hand-held colorimeter according to Claim 19,
**characterised in that** optical means are provided to direct the directionally reflected measurement light onto the additional optical sensor or to image the light source emitting this measurement light onto the sensor.

21. A hand-held colorimeter according to Claim 8,
**characterised in that** a flip-up aiming aid (120) is provided in the region of the main measurement window (111).

22. A hand-held colorimeter according to one of the preceding Claims,
**characterised in that** it is equipped with an integrated monitor holder (140) for fastening to a monitor (M) to be measured.

23. A hand-held colorimeter according to one of the preceding Claims,
**characterised in that** it is equipped with a preferably screw-on tripod holder.

24. A hand-held colorimeter according to one of the preceding Claims,
**characterised in that** the flat portion (101) of the outer device block (100) is provided with sliding elements.

## Revendications

1. Colorimètre manuel avec un boîtier (1), dans lequel se trouve une unité de mesure opto-électronique (20), qui reçoit la lumière à mesurer provenant d'un objet à mesurer, la convertit en signaux de mesure électriques correspondants et traite ces signaux de mesure en données de mesure de préférence numériques, caractérisant la couleur de l'objet à mesurer, et avec des composants (111 - 116) passifs nécessaires à la réalisation de différentes fonctions d'utilisation, qui peuvent être introduits de manière sélective dans la trajectoire du faisceau à mesurer de l'unité de mesure (20),
**caractérisé en ce que**
le colorimètre manuel présente un bloc d'appareil extérieur (100) et un bloc d'appareil intérieur (200) monté dans celui-ci à rotation autour d'un axe (A) dans plusieurs positions d'utilisation définies ;
les composants passifs (111 - 116) sont disposés dans le bloc d'appareil extérieur (100) ;
l'unité de mesure opto-électronique (20) est disposée dans le bloc d'appareil intérieur (200) ;
le bloc d'appareil extérieur (100) est réalisé de manière essentiellement annulaire et **en ce que** le bloc d'appareil intérieur (200) est réalisé à l'extérieur essentiellement en forme de tambour et est monté à rotation à l'intérieur du bloc d'appareil extérieur (100) autour de son axe (A) ;
le bloc d'appareil extérieur (100) forme au moins une partie du boîtier (1) ou un socle support du colorimètre manuel ;
l'unité de mesure opto-électronique (20) peut être tournée par rapport aux composants passifs (111 - 116) à l'aide du bloc d'appareil intérieur (200) de telle sorte que dans les positions d'utilisation, un des composants passifs (111 - 116) se trouve à chaque fois dans la trajectoire du faisceau à mesurer de l'unité de mesure opto-électronique (20) ;
le bloc d'appareil intérieur (200) contient des composants optiques (21, 22, 23, 27, 28, 29) et électriques (24, 25), qui sont nécessaires à la détection de la lumière à mesurer provenant d'un objet à mesurer ainsi qu'à la conversion en signaux de mesure correspondants et à leur préparation en données de mesure ; et
le bloc d'appareil extérieur (100) est doté sur son côté extérieur de plusieurs fenêtres de mesure (111 - 114), à travers lesquelles la lumière à mesurer peut accéder de l'extérieur à l'unité de mesure opto-électronique (20), , une seule des fenêtres de mesure (111 - 114) se trouvant à chaque fois dans la trajectoire du faisceau à mesurer dans chaque position d'utilisation du bloc d'appareil intérieur (200) ;
la lumière à mesurer allant de l'objet à mesurer à l'unité de mesure opto-électrique (20) en passant par la fenêtre de mesure (111 - 114) du bloc d'appareil extérieur (100), la fenêtre de mesure (28) du bloc d'appareil intérieur (200), une lentille d'entrée (21) et une tête de détection (22).

2. Colorimètre manuel selon la revendication 1, **caractérisé en ce que** des moyens d'encliquetage libérables (40, 41) sont prévus pour retenir le bloc d'appareil intérieur (200) de manière définie par rapport au bloc d'appareil extérieur (100) dans les différentes positions d'utilisation.

3. Colorimètre manuel selon la revendication 1 ou 2, dans lequel le bloc d'appareil intérieur (200) présente en outre une source de lumière (27) et un capteur optique (29).

4. Colorimètre manuel selon l'une quelconque des revendications précédentes, dans lequel l'unité de mesure opto-électrique (20) est réalisée sous forme de spectrophotomètre, de spectrophotomètre à réseau, de colorimètre ou sous forme de photodiode.

5. Colorimètre manuel selon la revendication 1 ou 4, **caractérisé en ce que** le bloc d'appareil intérieur (200) est réalisé avec des auxiliaires de préhension (201) qui facilitent le mouvement de rotation exercé par l'utilisateur.

6. Colorimètre manuel selon l'une quelconque des revendications précédentes, **caractérisé en ce que** le bloc d'appareil extérieur (100) présente un aplatissement (101) qui forme une surface d'appui pour le colorimètre manuel.

7. Colorimètre manuel selon l'une quelconque des revendications précédentes, dans lequel le colorimètre manuel est essentiellement quadratiquement carré avec un coin arrondi et dans lequel la profondeur de l'appareil, qui est perpendiculaire aux surfaces latérales carrées, est inférieure à la longueur et à la hauteur de l'appareil.

8. Colorimètre manuel selon la revendication 6, **caractérisé en ce qu'**une fenêtre de mesure principale (111) se trouve dans la zone de l'aplatissement (101).

9. Colorimètre manuel selon la revendication 8, **caractérisé en ce que** la fenêtre de mesure principale (111) est réalisée pour au moins une des trois fonctions d'utilisation mesure individuelle, mesure sérielle et mesure de moniteur.

10. Colorimètre manuel selon l'une quelconque des revendications précédentes, **caractérisé en ce qu'**une fenêtre de mesure de la lumière ambiante (113) se trouve sur le côté supérieur du bloc d'appareil extérieur (100) et est dotée de préférence d'un diffuseur (113a).

11. Colorimètre manuel selon l'une quelconque des revendications précédentes, **caractérisé en ce que** le bloc d'appareil extérieur (100) présente une fenêtre de mesure de projecteur (114) allongée, qui est disposée dans la partie supérieure latérale du bloc d'appareil extérieur (100) et s'étend de préférence sur un arc d'au moins 60° environ.

12. Colorimètre manuel selon l'une quelconque des revendications précédentes, **caractérisé en ce que** le bloc d'appareil extérieur (100) est équipé d'un étalon de référence du blanc (115), qui se trouve dans une des positions d'utilisation du bloc d'appareil intérieur (200) dans la trajectoire du faisceau à mesurer de l'unité de mesure opto-électronique (20).

13. Colorimètre manuel selon l'une quelconque des revendications précédentes, **caractérisé en ce que** le bloc d'appareil extérieur (100) est équipé d'au moins un étalon de référence de la couleur (116), qui se trouve dans une des positions d'utilisation du bloc d'appareil intérieur (200) dans la trajectoire du faisceau à mesurer de l'unité de mesure opto-électronique (20).

14. Colorimètre manuel selon l'une quelconque des revendications 12 et 13, **caractérisé en ce que** l'étalon de référence du blanc (115) et/ou l'étalon de référence de la couleur (116) est disposé , respectivement sont disposés à l'intérieur du bloc d'appareil extérieur (100) entre les fenêtres de mesure (111 - 114).

15. Colorimètre manuel selon l'une quelconque des revendications précédentes, **caractérisé en ce qu'**un capteur de position (41) est prévu pour la détection des positions d'utilisation du bloc d'appareil intérieur (200) par rapport au bloc d'appareil extérieur (100).

16. Colorimètre manuel selon l'une quelconque des revendications précédentes, **caractérisé en ce qu'**au moins une position d'utilisation, dans laquelle toutes les fenêtres de mesure (111 - 114) sont fermées, est prévue pour le bloc d'appareil intérieur (200).

17. Colorimètre manuel selon l'une quelconque des revendications 11 et 12, **caractérisé en ce que** toutes les fenêtres de mesure (111 - 114) sont fermées, lorsque le bloc d'appareil intérieur (200) se trouve dans une position d'utilisation prévue pour la mesure de l'étalon de référence du blanc (115) et/ou de l'étalon de référence de la couleur (116).

18. Colorimètre manuel selon l'une quelconque des revendications précédentes, **caractérisé en ce que** l'unité de mesure opto-électronique (20) contient une source de lumière (27) pour la sollicitation de l'objet à mesurer.

19. Colorimètre manuel selon la revendication 18, **caractérisé en ce que** l'unité de mesure opto-électronique (20) comprend au moins un capteur optique supplémentaire (29) servant à la détection de la lumière à mesurer réfléchie de manière orientée par l'objet à mesurer.

20. Colorimètre manuel selon la revendication 19, **caractérisé en ce que** des moyens optiques sont prévus pour diriger la lumière à mesurer réfléchie de manière orientée sur le capteur optique supplémentaire, respectivement pour représenter la source de lumière émettant la lumière à mesurer sur le capteur.

21. Colorimètre manuel selon la revendication 8, **caractérisé en ce qu'**un auxiliaire de visée déployable (120) est prévu dans la zone de la fenêtre de mesure principale (111).

22. Colorimètre manuel selon l'une quelconque des revendications précédentes, **caractérisé en ce qu'**il est équipé d'un porte-moniteur (140) intégré pour la fixation sur un moniteur (M) à étalonner.

23. Colorimètre manuel selon l'une quelconque des revendications précédentes, **caractérisé en ce qu'**il est équipé d'un porte-trépied de préférence vissable.

24. Colorimètre manuel selon l'une quelconque des revendications précédentes, **caractérisé en ce que** l'aplatissement (101) du bloc d'appareil extérieur (100) est doté d'éléments de glissement.
